# EUROPEAN PATENT SPECIFICATION

(11) **EP 3 730 460 B1**
(45) Date of publication and mention of the grant of the patent: **04.05.2022**
(21) Application number: 18908489.0
(22) Date of filing: 08.03.2018
(51) Int. Cl.: C02F 3/08, C02F 3/10, C02F 3/30

(54) **METHOD FOR UPGRADING AND EXPANDING SEWAGE BIOLOGICAL TREATMENT PROCESS**
VERFAHREN ZUR VERBESSERUNG UND ERWEITERUNG EINES BIOLOGISCHEN ABWASSERBEHANDLUNGSVERFAHRENS
PROCÉDÉ DE VALORISATION ET D'EXPANSION D'UN PROCESSUS DE TRAITEMENT BIOLOGIQUE D'EAUX USÉES

(43) Date of publication of application: 28.10.2020
(73) Proprietor: Dalian University Of Technology, Dalian, Liaoning 116024 (CN)
(72) Inventor: QUAN, Xie, Dalian, Liaoning 116024 (CN); MAO, Yanjun, Dalian, Liaoning 116024 (CN); ZHANG, Yaobin, Dalian, Liaoning 116024 (CN); CHEN, Shuo, Dalian, Liaoning 116024 (CN)
(74) Representative: Murgitroyd & Company
(86) International application number: PCT/CN2018/078443
(87) International publication number: WO 2019/169610

(56) References cited:
- CN-A- 101 746 884
- CN-A- 103 991 958
- CN-A- 104 710 006
- CN-A- 106 045 049
- CN-A- 106 565 017
- CN-A- 108 423 825
- CN-B- 103 112 951
- JP-A- H07 163 994
- MAO YANJUN ET AL: "Accelerated startup of moving bed biofilm process with novel electrophilic suspended biofilm carriers", CHEMICAL ENGENEERING JOURNAL, ELSEVIER, AMSTERDAM, NL, vol. 315, 16 January 2017 (2017-01-16), pages 364-372, XP029924032, ISSN: 1385-8947, DOI: 10.1016/J.CEJ.2017.01.041
- Pennsylvania Department Of Environmental Protection: "Wastewater Treatment Plant Operator Certification Training. Module 16: The Activated Sludge Process Part II", , 1 October 2014 (2014-10-01), XP055762432, Retrieved from the Internet: URL:http://files.dep.state.pa.us/Water/BSD W/OperatorCertification/TrainingModules/ww 16_sludge_2_wb.pdf [retrieved on 2020-12-23]

## Description

### Technical Field

The present invention relates to a method of upgrading the activated sludge process based on functional suspended carriers in the wastewater biological treatment process and belongs to the technical field of wastewater biological treatment.

### Background

Currently, the activated sludge process (including single activated sludge process, A²O and AO process, oxidation ditch process, etc.) is mainly used in the existing secondary biochemical treatment units of wastewater treatment plants. According to the discharge standard of pollutants for wastewater treatment plant at that time, the removal of organic matter (COD, BOD) and suspended solids (SS) was the main task in many wastewater treatment plants. After the implementation of new discharge standard, the existing wastewater treatment plants with lower design standard generally have problems such as low wastewater treatment efficiency, low attainment rate, excessive discharge of pollutants and so on. Therefore, these wastewater treatment plants have to be upgraded in order to meet the new discharge standard. The key to solve the problem of water environmental pollution is that a high-efficiency wastewater treatment technology could be developed as soon as possible, which can modify the original treatment technology and improve the performance of the treatment process without larger changes of the original treatment technology. The wastewater biological treatment process based on suspended biofilm carrier is a combined wastewater treatment process that can complete the upgrading by using the original structure without adding new footprint and extending process. It can greatly reduce the investment cost and operation cost, and overcome the key technical bottleneck that restricts the upgrading of wastewater treatment. However, there are still some nonignorable problems in the use of traditional biofilm carriers, such as bad biocompatibility, slow biofilm formation, low efficiency of wastewater treatment and so on, which restrict the further development and application of this process. In order to address the problems above, the object of the present invention is to apply the enhanced wastewater biological treatment process based on functional suspended carriers in the upgrading of the activated sludge process for the wastewater biological treatment.

### Summary

In view of the problems occurred in the existing wastewater treatment plants such as low wastewater treatment efficiency, low attainment rate and excessive discharge of pollutants, the object of the present invention is to provide a method of upgrading the activated sludge process by adding functional suspended carriers in the wastewater biological treatment process.

The technical solutions of the present invention are as follows:
A method of upgrading the activated sludge process based on functional suspended carriers in the wastewater biological treatment process, which includes the following steps:
(1) Activated sludge reactor is divided into anaerobic zone, anoxic zone, aerobic zone 1 and aerobic zone 2 by partition walls. In order to improve the biodegradability of the system (BOD₅/COD > 0.3), functional biofilm carriers are added in the anaerobic zone to enhance the oxidative (reductive) degradation capability of organic pollutants (especially for refractory organic pollutants) by microbes in water. The functional suspended carriers are made of graphene oxide and/or biochar as the functional materials and polyethylene as the basic raw material by physical blending and screw extrusion. Electrophilic suspended biofilm carriers are added in anoxic zone, aerobic zone 1 and aerobic zone 2. The surface of nitrifying bacteria and denitrifying bacteria in biochemical wastewater treatment system are generally electronegativity. Adding electrophilic suspended biofilm carriers with electropositive surface in the anoxic and aerobic zones is beneficial to enhance the enrichment of anoxic denitrifying bacteria and aerobic nitrifying bacteria on the carrier surface, so as to improve the denitrification performance in the anoxic zone and the simultaneous nitrificationdenitrification performance in the aerobic zone. The electrophilic suspended carriers are made of electrophilic polymer as functional materials and polyethylene as basic raw materials by physical blending and screw extrusion.
(2) Influent diversion (i.e. the wastewater was fed from the front of anaerobic zone and anoxic zone respectively) is adopted so that some wastewater can be fed to the anoxic zone. The way can avoid excessive consumption of influent carbon sources in the anaerobic zone, and provide more carbon sources for heterotrophic denitrifying bacteria and denitrifying phosphorus accumulating bacteria, thus improving the performance of denitrifying phosphorus removal.
(3) The nitrate is refluxed from the end of the aerobic zone 2 to the front of the anoxic zone, and the reflux ratio is more than 50%.
(4) The reflux sludge is refluxed from the biochemical secondary settling tank to the front of the anaerobic zone, and the reflux ratio is more than 100%.
(5) The way of influent diversion: the influent diversion ratio (feeding to anaerobic zone and anoxic zone) is 1:0.25- 4;

The main function of aerobic zone 1 is to remove organic pollutants in water and reduce COD concentration of effluent, so as to meet the requirements of discharge standard. The main function of aerobic zone 2 is to improve the nitrogen removal of the system by enhancing nitrification and simultaneous nitrification and denitrification.

The suspended carrier content of the anaerobic zone, anoxic zone, aerobic zone 1 and aerobic zone 2 is not more than 50% of the effective volume of each reactor.

In order to obtain the full mixing and contact of "wastewater-suspended carrier-activated sludge-oxygen (aerobic zone)" in each reactor, mechanical stirring is used in the anaerobic zone and anoxic zone, while microporous aeration is used at the bottom of the aerobic zone 1 and aerobic zone 2.

The beneficial effects of the present invention are as follows: the method of upgrading the activated sludge process based on adding functional suspended carriers in the wastewater biological treatment process is an efficient upgrading technology of wastewater biological treatment process, owing to simple implement, no demand of adding new footprint and extending the original process, and low energy consumption.

### Detailed description

Detailed embodiments that do not belong to the present invention are described below in conjunction with the technical solutions.

### Embodiment 1

The upgrading and expansion methods of municipal wastewater treatment plants are as follows: (1) the effective volume ratio of anaerobic zone, anoxic zone, aerobic zone 1 and aerobic zone 2 was 1:2: 2: 2; (2) the influent diversion ratio of feeding to anaerobic zone and anoxic zone respectively was 1: 1; (3) the reflux ratio of nitrate and reflux sludge were 100% and 50%, respectively; (3) the functional carrier content of the anaerobic zone, anoxic zone, aerobic zone 1 and aerobic zone 2accounted for 15%, 30%,30% and 45% of the effective volume of each reactor, respectively.(4) the hydraulic retention time of anaerobic zone, anoxic zone, aerobic zone 1 and zone 2 were 2, 4, 4 and 4 hours respectively; (5) the dissolved oxygen concentration in anaerobic zone and anoxic zone were below 0.1 mg/L, while that value in aerobic zone 1 and aerobic zone 2 were maintained at 2-3 mg/L. The operation results showed that compared with the original activated sludge process, the wastewater biological treatment process based on functional suspended carrier not only shortened the hydraulic retention time (6 hours shorter than the original activated sludge process) and increased the removal rates of COD, NH₄⁺-N, TN and TP by more than 20%, 45%, 35% and 25% respectively, but also made the effluent quality meet the requirements (COD<50 mg/L, NH₄⁺-N<5 mg/L, TN<8 mg/L, TP<1 mg/L) of Class I (A) of Discharge Standard of Pollutants for Municipal Wastewater Treatment Plant of China (GB18918-2002).

### Embodiment 2

The upgrading and expansion methods of industrial wastewater treatment plants are as follows: (1) the effective volume ratio of anaerobic zone, anoxic zone, aerobic zone 1 and aerobic zone 2 was 1:2: 2: 1; (2) the influent split ratio of feeding to anaerobic zone and anoxic zone respectively was 1: 2; (3) the reflux ratio of nitrate and reflux sludge were 200% and 100%, respectively; (4) the functional carrier content of the anaerobic zone, anoxic zone, aerobic zone 1 and aerobic zone 2accounted for 20%, 30%,40% and 40% of the effective volume of each reactor, respectively. (5) the hydraulic retention time of anaerobic zone, anoxic zone, aerobic zone 1 and zone 2 were 8, 16, 16 and 8 hours respectively; (6) the dissolved oxygen concentration in anaerobic zone and anoxic zone were below 0.1 mg/L, while that value in aerobic zone 1 and aerobic zone 2 were maintained at 3-4 mg/L. The operation results showed that compared with the original activated sludge process, the wastewater biological treatment process based on functional suspended carrier not only shortened the hydraulic retention time (16 hours shorter than the original activated sludge process), but also increased the removal rates of COD, NH₄⁺-N, TN and TP by more than20%, 45%, 35% and 25% respectively.

## Claims

1. A method of upgrading an activated sludge process in a wastewater biological treatment process based on suspended carriers in the wastewater biological treatment process, wherein the method comprises the following steps:
first, dividing an activated sludge reactor into an anaerobic zone, an anoxic zone, an aerobic zone 1 and an aerobic zone 2 by partition wall;
second, adding biofilm carriers to the anaerobic zone, adding electrophilic suspended biofilm carriers to the anoxic zone, the aerobic zone 1 and the aerobic zone 2;
third, influent diversion, feeding the wastewater from the front of the anaerobic zone and the anoxic zone respectively, adopting to lead some wastewater into the anoxic zone, and avoiding excessive consumption of influent carbon sources in the anaerobic zone due to feeding wastewater only from the anaerobic zone, and providing more carbon sources for heterotrophic denitrifying bacteria and denitrifying phosphorus accumulating bacteria, thus improving the performance of denitrifying phosphorus removal;
wherein, refluxing nitrate from the end of the aerobic zone 2 to the front of the anoxic zone, and the nitrate reflux ratio is more than 50%;
refluxing reflux sludge from the biochemical secondary settling tank to the front of the anaerobic zone, and the reflux sludge ratio is more than 100%;
the way of influent diversion: the influent diversion ratio, feeding to the anaerobic zone and the anoxic zone,is1:0.25 - 4;
wherein the biofilm carriers added to the anaerobic zone are made of graphene oxide and/or biochar as materials and polyethylene as basic raw material by physical blending and screw extrusion.

2. The method of upgrading the activated sludge process in a wastewater biological treatment process based on suspended carriers in the wastewater biological treatment process according to claim 1, wherein, the percentage of added the biofilm carriers in the anaerobic zone is less than 50% of the effective volume of the anaerobic zone; and the percentage of electrophilic suspended biofilm carriers in the anoxic zone, the aerobic zone 1 and the aerobic zone 2 is less than 50% of the effective volume of each reactor.

3. The method of upgrading the activated sludge process in a wastewater biological treatment process based on suspended carriers in the wastewater biological treatment process according to claim 1 or 2, wherein,mechanical stirring is used in the anaerobic zone and anoxic zone, while microporous aeration is used at the bottom of the aerobic zone 1 and the aerobic zone 2, in order to obtain the full mixing of "wastewater-suspended carrier-activated sludge-oxygen " in each reactor.

## Patentansprüche

1. Ein Verfahren zum Verbessern eines Belebtschlammverfahrens in einem biologischen Abwasserbehandlungsverfahren basierend auf suspendierten Trägern in dem biologischen Abwasserbehandlungsverfahren, wobei das Verfahren die folgenden Schritte beinhaltet:
Erstens, Trennen eines Belebtschlammreaktors in eine anaerobe Zone, eine anoxische Zone, eine aerobe Zone 1 und eine aerobe Zone 2 durch eine Scheidewand;
Zweitens, Hinzugeben eines Biofilmträgers zu der anaeroben Zone, Hinzugeben von elektrophilen suspendierten Biofilmträgern zu der anoxischen Zone, der aeroben Zone 1 und der aeroben Zone 2;
Drittens, Zuflussverteilung, Zuführen des Abwassers von der Vorderseite der anaeroben Zone bzw. der anoxischen Zone, die verwendet wird, um etwas Abwasser in die anoxische Zone zu leiten, und die übermäßigen Verbrauch von Kohlenstoffzuflussquellen in der anaeroben Zone wegen Zuführen von Abwasser nur aus der anaeroben Zone vermeidet und die zusätzliche Kohlenstoffquellen für heterotrophe Denitrifikationsbakterien und Phosphor akkumulierende Denitrifikationsbakterien bereitstellt, wodurch die Leistung der Denitrifikationsphosphorentfernung verbessert wird;
wobei, Nitrat von dem Ende der aeroben Zone 2 zu der Vorderseite der anoxischen Zone zurückfließt und das Nitratrückflussverhältnis mehr als 50 % beträgt;
Rückflussschlamm von dem sekundären biochemischen Absetzbehälter zu der Vorderseite der anaeroben Zone zurückfließt und das Schlammrückflussverhältnis mehr als 100 % beträgt;
der Weg der Zuflussverteilung: das Zuflussverteilungsverhältnis, Zuführen zu der anaeroben Zone und der anoxischen Zone, 1 : 0,25-4 beträgt;
wobei die zu der anaeroben Zone hinzugegebenen Biofilmträger aus Graphenoxid und/oder Biokohle als Materialien und Polyethylen als Ausgangsmaterial durch physisches Mischen und Schneckenextrusion hergestellt werden.

2. Verfahren zum Verbessern des Belebtschlammverfahrens in einem biologischen Abwasserbehandlungsverfahren basierend auf suspendierten Trägern in dem biologischen Abwasserbehandlungsverfahren gemäß Anspruch 1, wobei der Prozentanteil von hinzugegebenen Biofilmträgern in der anaeroben Zone weniger als 50 % des effektiven Volumens der anaeroben Zone beträgt; und der Prozentanteil von elektrophilen suspendierten Biofilmträgern in der anoxischen Zone, der aeroben Zone 1 und der aeroben Zone 2 weniger als 50 % des effektiven Volumens jedes Reaktors beträgt.

3. Verfahren zum Verbessern des Belebtschlammverfahrens in einem biologischen Abwasserbehandlungsverfahren basierend auf suspendierten Trägern in dem biologischen Abwasserbehandlungsverfahren gemäß Anspruch 1 oder 2, wobei mechanisches Rühren in der anaeroben Zone und der anoxischen Zone verwendet wird, während mikroporöse Belüftung am Boden der aeroben Zone 1 und der aeroben Zone 2 verwendet wird, um die volle Durchmischung von "Abwasser-suspendiertem Träger-Belebtschlamm-Sauerstoff" in jedem Reaktor zu erhalten.

## Revendications

1. Un procédé de valorisation d'un processus de boues activées dans un processus de traitement biologique d'eaux usées sur la base de porteurs en suspension dans le processus de traitement biologique d'eaux usées, le procédé comprenant les étapes suivantes :
premièrement, diviser un réacteur de boues activées en une zone anaérobie, une zone anoxique, une zone aérobie 1 et une zone aérobie 2 par une paroi de séparation ;
deuxièmement, ajouter des porteurs biofilms à la zone anaérobie, ajouter des porteurs biofilms en suspension électrophiles à la zone anoxique, la zone aérobie 1 et la zone aérobie 2 ;
troisièmement, dérivation d'affluent, amener les eaux usées depuis l'avant de la zone anaérobie et de la zone anoxique respectivement, ce qui est adopté pour guider une partie des eaux usées jusque dans la zone anoxique, et ce qui évite une consommation excessive de sources de carbone d'affluent dans la zone anaérobie du fait d'amener des eaux usées uniquement depuis la zone anaérobie, et ce qui fournit davantage de sources de carbone pour les bactéries dénitrifiantes hétérotrophes et les bactéries accumulant le phosphore dénitrifiantes, améliorant ainsi la performance de l'élimination du phosphore dénitrifiant ;
dans lequel, le nitrate est reflué de l'extrémité de la zone aérobie 2 à l'avant de la zone anoxique, et le taux de reflux du nitrate est supérieur à 50 % ;
les boues de reflux sont refluées du bassin de décantation secondaire biochimique vers l'avant de la zone anaérobie, et le taux de boues de reflux est supérieur à 100 % ;
le parcours de dérivation d'affluent : le rapport de dérivation d'affluent, amenant vers la zone anaérobie et la zone anoxique, est de 1/0,25 - 4 ;
dans lequel les porteurs biofilms ajoutés à la zone anaérobie sont réalisés en oxyde de graphène et/ou biocharbon en tant que matériaux et en polyéthylène en tant que matériau brut basique par mélange homogène physique et extrusion à vis.

2. Le procédé de valorisation du processus de boues activées dans un processus de traitement biologique d'eaux usées sur la base de porteurs en suspension dans le processus de traitement biologique d'eaux usées selon la revendication 1, dans lequel le pourcentage des porteurs biofilms ajoutés dans la zone anaérobie est inférieur à 50 % du volume effectif de la zone anaérobie ; et le pourcentage de porteurs biofilms en suspension électrophiles dans la zone anoxique, la zone aérobie 1 et la zone aérobie 2 est inférieur à 50 % du volume effectif de chaque réacteur.

3. Le procédé de valorisation du processus de boues activées dans un processus de traitement biologique d'eaux usées sur la base de porteurs en suspension dans le processus de traitement biologique d'eaux usées selon la revendication 1 ou la revendication 2, dans lequel une agitation mécanique est utilisée dans la zone anaérobie et la zone anoxique, tandis qu'une aération microporeuse est utilisée au fond de la zone aérobie 1 et de la zone aérobie 2, afin d'obtenir le mélange complet « eaux usées-porteur en suspension-boues activées-oxygène » dans chaque réacteur.
